# EUROPEAN PATENT SPECIFICATION

(11) **EP 2 289 285 B1**
(45) Date of publication and mention of the grant of the patent: **21.08.2013**
(21) Application number: 09762099.1
(22) Date of filing: 03.06.2009
(51) Int. Cl.: H05B 33/08

(54) **USER INTERFACE DEVICE FOR CONTROLLING A CONSUMER LOAD AND LIGHT SYSTEM USING SUCH USER INTERFACE DEVICE**
BENUTZEROBERFLÄCHENVORRICHTUNG ZUR STEUERUNG EINER VERBRAUCHERBELASTUNG UND BELEUCHTUNGSSYSTEM MIT EINER SOLCHEN BENUTZEROBERFLÄCHENVORRICHTUNG
DISPOSITIF D'INTERFACE UTILISATEUR POUR COMMANDER UNE CHARGE CONSOMMATRICE ET SYSTÈME D'ÉCLAIRAGE UTILISANT UN TEL DISPOSITIF D'INTERFACE UTILISATEUR

(30) Priority: 10.06.2008 EP 08104341
(43) Date of publication of application: 02.03.2011
(73) Proprietor: Koninklijke Philips Electronics N.V., 5621 BA Eindhoven (NL)
(72) Inventor: DIEDERIKS, Elmo, M., A., NL-5656 AE Eindhoven (NL)
(74) Representative: Bekkers, Joost J.J.
(86) International application number: PCT/IB2009/052338
(87) International publication number: WO 2009/150572

(56) References cited:
- WO-A-2006/134529
- WO-A-2007/105151
- US-A1- 2006 290 710

## Description

### FIELD OF THE INVENTION

The invention relates to a user interface device for controlling an electrical consumer, in particular, a light system. Further, it relates to light system using such user interface device.

### BACKGROUND OF THE INVENTION

In the fields of electrical power control user interface devices like switches or dimmers are used to adjust an amount of an electrical power provided from an electrical power source to an electrical consumer load. The electrical consumer load might be a lamp in a lighting system including a plurality of different lamps, an electrical motor in a home appliance like a kneading machine or in a vacuum cleaner or an electrical heater. In the easiest case the switch is a hard switch for merely switching on/off the power supply to the electrical consumer load. In an on state, the maximum available electrical power is supplied to the electrical consumer load and in the off-state, no electrical power is supplied to the electrical consumer load. User interface devices or soft switches like dimmers can be applied to continuously adjust the electrical power supply to the electrical consumer load. Such dimmers have become popular in controlling light appliances.

Light appliances are one of the most important ambience makers. People use light appliances to create different ambiences for different moods or activities. Research has shown that people also like to use colored light to further enhance those ambiences. Therefore, light appliances include a full color light sources to enable people to create these ambiences.

Further advanced light appliances are flexible and integrated. Such light appliances comprise multiple full color light sources, variable color temperature light sources and 'normal' functional light sources. In some cases such light appliances further interacts with other electrical consumer loads like a HIFI-device, an electrical heater or an air-conditioner to further enhance the ambience generation. In other words, modem light appliances do not only comprise a conventional illumination function but also ambience creation functions for influencing the mood in a room. At the beginning, these functions were merely applied in professional environments in offices and shops. However, this kind of ambience creation becomes more and more popular to average users.

Since these advanced light appliances include a plurality of different lamps and in particular multiple full color light sources and/or variable color temperature light sources, the control of such advanced light appliance is very complex. The user interface device for controlling the light system requires a unique switch for each of the ambience creation function. This results not only in a huge space requirement for the overall light controller but makes the user interface device also difficult to use for average users. These discussed disadvantages are also valid for other electrical consumer loads to be controlled by a switch, like a plurality of indoor units of air conditioners in a house.

WO 2007/072315 proposes to interconnect a user interface and a light source to be electrically controlled by the user interface with an electronic controller. The electronic controller receives an instruction from the user interface and adjusts the electrical power at the light source based on the user instruction.

WO 2007/105151 A1 describes a control device for controlling the hue of light emitted by a light source comprising a hue selection surface capable of displaying one or more hues available for said light of said light source and interaction detection means for detecting interaction between said hue selection surface and a user of said control device in selecting said hue for said light of said light source.

WO 2006/134529 A2 describes a lighting device equipped with three light sources supplying red, green and blue light respectively, the color and/or intensity of the light generated by the three light sources together can be adjusted by means of adjustment points.

However, the application of conventional control devices for controlling an electrical consumer load is getting more complex or unmanageable with an increase of the complexity of the overall system. This makes it difficult to use conventional control devices especially for the average user.

When using complex user interface devices for controlling an electrical consumer, it is difficult to present a respective feedback or feed forward information on what preset is selected at the user interface device. When using a colored display in the user interface device, it is difficult to recognize a feedback indicator representing the respective selected value, since all colors are present on the display resulting in the problem that the feedback indicator is not visible in areas of the display device having the same or similar colors as the feedback indicator indicating the selected preset.

### OBJECT AND SUMMARY OF THE INVENTION

Thus, it is an object of the present invention to provide a user interface device for controlling an electrical consumer load, which is easily operable and provides the possibility to recognize a selected preset in all areas of the display device.

The object is solved by the features of the independent claims.

The invention is based on the thought that the light output by the user interface device can be used to provide feedback or feed forward information on what preset is selected. Moreover, the display unit in the user interface device is able to provide a full color range to provide feedback information of the color temperature, of the daylight setting, the color level or a saturation level, etc.

When representing a range of values of a respective scale including a plurality of colors, it is proposed to use a feedback indicator indicating which values are currently set at the light system or consumer load. Preferably the feedback indicator is a point or area having at least one color, whereby the color of the feedback indicator is preferably set in dependence on the color of the color scale.

It is proposed to display on the display device a first colored scale, which is indicating a first range of values, which are adjustable by a user input. The user interface device includes an input device and a display device, which are stacked on each other as two layers or which are intemested in each other in one common layer. Thus, by pressing the input device, a predetermined interaction is performed, which is displayed on the display device and in parallel initiating a control at the connected consumer load. Thus, by moving or pressing a finger on the first colored scale, the connected consumer load will be controlled in its color temperature, brightness, daylight setting, color level or saturation level correspondingly.

The underlying problem should be illustrated on an example. If a full color scale is illustrated on a display device, a strong color could be used for indicating the current value, which is set at the connected consumer load. If a small yellow dot is used as feedback indicator for indicating the current value output by the user interface device to the consumer load the yellow dot will hardly be visible, if it is located or moved in the area of orange and yellow color levels. Thus, it is preferably proposed to influence the color of the feedback indicator realized as a small dot of light to indicate the position of the current setting on the first colored scale.

According to an alternative embodiment of the present invention, it is proposed to arrange a color layer in front of the display device. The color layer may be placed between the display device and the input device or in front of the input device. In case of using an internested common layer for accommodating the input unit and the display unit, the color layer is arranged in front of the common layer.

The color layer may include the first or second scale as displayed in the first embodiment. The scale may be a colored ring or other shape, which may be printed on the color layer. Thus, the user may recognize the possible areas for adjusting values of the light system by using the first or second scale. In this embodiment, it is not possible to change the range of the first or second scale. Also the first and/or second background areas are fixed in its color. However, the feedback indicator for indicating the position of the setting could be easily displayed by the display device at the respective position behind the scale. Thus, the driving circuitry is less complex. Moreover, different color scales could be used by inserting the respective color layers in the control device. Also in this embodiment, it is necessary to change the color of the feedback indicator, if the feedback indicator is moved into an area, which has the same color as the feedback indicator normally has.

Preferred embodiments will be explained based on the dependent claims.

According to preferred embodiments, the input device is realized as a touch screen having a plurality of touch sensitive elements, which are arranged in front of the display device, wherein the display device includes a plurality of full color LEDs, which are arranged in matrix form.

By arranging the touch sensitive input device in front of the display device, one could recognize the position of the user input due to the feedback indicator and can amend the illustration on the display device according to the moved position of the finger of the user.

The application of full color solid state LEDs is advantageous, since it does not require a complex and expensive full color LCD having higher power consumption and requiring a complex driving circuitry. When using a matrix of LEDs, it is easy to illustrate color information on the display device. Thus, the LED matrix could form a low-resolution display. In particular, each LED is addressable independently. Thus, a full color LED matrix is achieved, which could illustrate a plurality of different scales, feedback indicators or background areas.

Preferably, the display device is adapted to display a second scale on the display area, which indicates a second range of values, which could be adjusted by a user input on the second scale. Thus, the display device provides a first and second scale. Each scale represents a physical parameter, which could be adjusted at the consumer load. The second scale also includes a second feedback indicator preferably realized as a small dot or area of light having at least one color, which is located within the second scale for indicating the current second value, which is output by the user interface device to the consumer load.

Thus, at least two different parameters could be controlled by the user interface device of the present invention, whereas the display device illustrates the possible range of values, which could be selected. The display device further illustrates the current selection output to the consumer load by moving the feedback indicator to the position on the scale representing the current selection.

The consumer load is preferably a lighting system, which could be adapted in its color temperature, color level, saturation level or its brightness.

By this, the color/light setting of the connected consumer load is presented to a user in one or more scales, wherein the position of the current setting in the scales is indicated by a feedback indicator as a small dot of light.

Moreover, it is proposed to adapt or to change the color of the first and/or second feedback indicator in dependence on the position within the first and/or second scale.

Thus, it is avoided to indicate the position of the current setting by a yellow small dot in the yellow area of the first or second colored scale. Thus, it is possible to illustrate the current setting on one of the scales by a color, which could be easily recognized in dependency on the background color of the first or second scale.

Moreover, also light incident on the display device could be considered when determining the color of the first or second feedback indicators.

Additional, it is possible to use at least two colors for indicating the current setting with the feedback indicator. Thus, it is possible to have an edge color and a center color for the first and/or second feedback indicators. The edge and center colors could be selected based on the position within the first or second scale.

Moreover, the display device includes preferably a first and/or second background area. The background area is adjustable in its color dependent on time, on light incident on the user interface device. For detecting light incident on the user interface device a daylight sensor is arranged.

Moreover, the color in the background area is adjustable based on position of the first or second feedback indicators in the first or second scale.

By this, it is further possible to increase the contrast and the recognizability of the current setting to indicate the position of the feedback indicators within these scales. If the feedback indicator is within the blue color, it is possible to increase the contrast by switching the first and/or second background areas into white color. When the feedback indicator is within the green colors it is possible to switch the first and/or second background areas into a light green to further increase the contrast. The same applies for position of the feedback indicators in the yellow and orange areas and/or in the red areas.

Preferably, it is proposed to change the color of the feedback indicator indicating the current setting each time a certain segment of colors is left. That means in the blue color segment a yellow feedback indicator is used, in the red color segment a green feedback indicator is used, wherein in the yellow and orange color segment a blue dot is used as feedback indicator, wherein in the green color segment a red small dot is used as feedback indicator. Thus, for indicating the small dot for providing the feedback, the contrasting color is used compared to the underlying color of the scale, where the feedback indicator is located for indicating the current position.

In a further embodiment, it is possible to only amend the color of the feedback indicator in an area of the color scale, which has the same or similar color as the feedback indicator. That means a normally yellow feedback indicator is getting blue, if the current setting is positioned in a yellow or similar color segment. In all other color segments a yellow feedback indicators is recognizable without amending the color of the feedback indicator. Thus, the amount of control is reduced.

By using the invention, it is possible to illustrate an intensity scale, wherein the small dot providing the feedback of the current setting will have the opposite intensity. Thus, at 100% intensity on first scale the dot will be off, wherein at 0% intensity, the dot will be full on. For a color temperature scale, the dot of light could have a color that matches the color temperature but is more saturated. Thus, at a warm light setting the dot would have a saturated red color, wherein at a cool light setting the dot would have saturated blue color. By this, the dot would be more visible, if it has a contrasting color. At warm light setting, the dot could have a saturated color, wherein at a white setting the dot could have a saturated orange color.

For light setting scales from sunrise to high noon to sunset, the dot of light could change from bluish to yellow and back to bluish or other suited colors.

In case of displaying a saturation scale on the display device, the feedback dot can have the opposite saturation level. Thus, at 100% saturation the dot could be white, wherein at 0% intensity the dot could be fully saturated in the color for which the saturation level is being set.

The user interface device preferably includes a touch input. However, all the other means for receiving a user input could be used. Thus, it may be possible to have a slider mechanism arranged within the first or second scale, wherein the slider mechanism includes a small knob, which could be illustrated in a certain color, wherein the color of the small knob is amended based on the position within the first or second scale. Thus, the knob could be easily recognized as a feedback indicator for providing information of the current setting at the connected light system.

Moreover, the control device includes central computing unit and a control port to control the light system respectively.

The object is further solved by a light system having at least one full color light source and/or one or more variable color temperature light sources, which are controlled by a user interface device as mentioned above.

The object is also solved by a method for controlling a consumer load and for providing feedback information to a user, comprising the steps of: receiving a user input on an input unit, displaying on a display device at least a first colored scale indicating a first range of values, displaying a first feedback indicator within the first colored scale indicating the current value of the first range of values output by the user interface device to a consumer load.

### BRIEF DESCRIPTION OF THE DRAWINGS

The invention will be described in greater detail hereinafter, by way of nonlimiting examples, with reference to the embodiments shown in the drawings.
- Fig. 1: illustrates an exemplary construction of a user interface device according to the present invention.
- Fig. 2: illustrates a layout of a display device according to the present invention.
- Figs. 3, 4 and 5: illustrate examples for layouts according to the present invention.
- Fig. 6: illustrates the components of the user interface device according to the present invention.
- Fig. 7: illustrates a flow chart for displaying the feedback indicator on the display device and to set the light corresponding to the user action.
- Fig. 8: illustrates an alternative embodiment of the user interface device according to the present invention.

### DESCRIPTION OF EMBODIMENTS

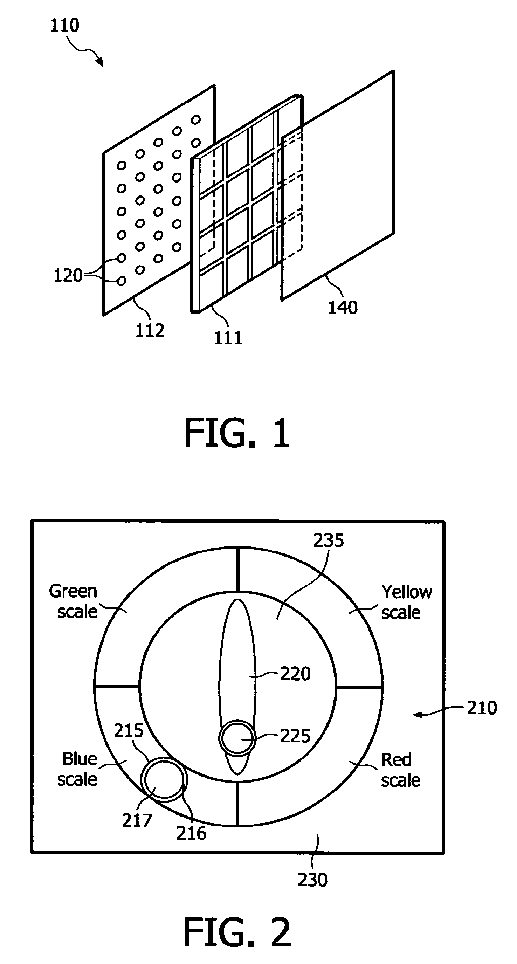

In fig. 1 the mechanical construction of the inventive user interface device is illustrated having three layers. The first layer includes the display layer 112 having a plurality of LEDs 120 arranged in matrix form. In front of the display device 112, there is an input unit 111, which may be realized as a touch pad having areas for detecting positions of user input. Moreover, a cover layer 140 may be arranged in front of the input unit 111 to protect the underlying first and second layers. The cover layer 140 may have a diffusing function to diffuse the light outputted by the LED matrix.

Fig. 2 illustrates a schematic layout, which could be displayed by the LED matrix 120 on the display device 112. There may be a first colored scale 210 illustrating a color scale starting from the yellow scale in the first quadrant and a green scale in the second quadrant followed by a blue scale in a third quadrant and a red scale in the fourth quadrant. Within the four scales, the colors start for instance with a light green going into dark green before leaving the green scale and going into the blue scale starting with a light blue, which is then going into dark blue until purple, wherein from purple it goes into the red scale via deep red into light red to the orange yellow colors in the yellow scale. Thereby representing the full color scale. On this first scale 210 illustrated as a ring there is a feedback indicator 215, which indicates the position of the current setting. This feedback indicator 215 is illustrated in a predetermined color. As already explained above, when placing the feedback indicator 215 with yellow color in the blue scale, the yellow dot 215 will be easily recognized. However, when placing the yellow dot 215 into the yellow scale in the first quadrant, the yellow feedback indicator 215 will be recognized very hardly, only. Moreover, fig. 2 includes a second scale 220 also illustrating a range of possible values, which could be adjusted at the connected consumer load. The second scale includes a second feedback indicator 225. Further, the display unit 112 includes a first background area 230 outside the ring and a second background area 235 inside the ring of the first scale 210.

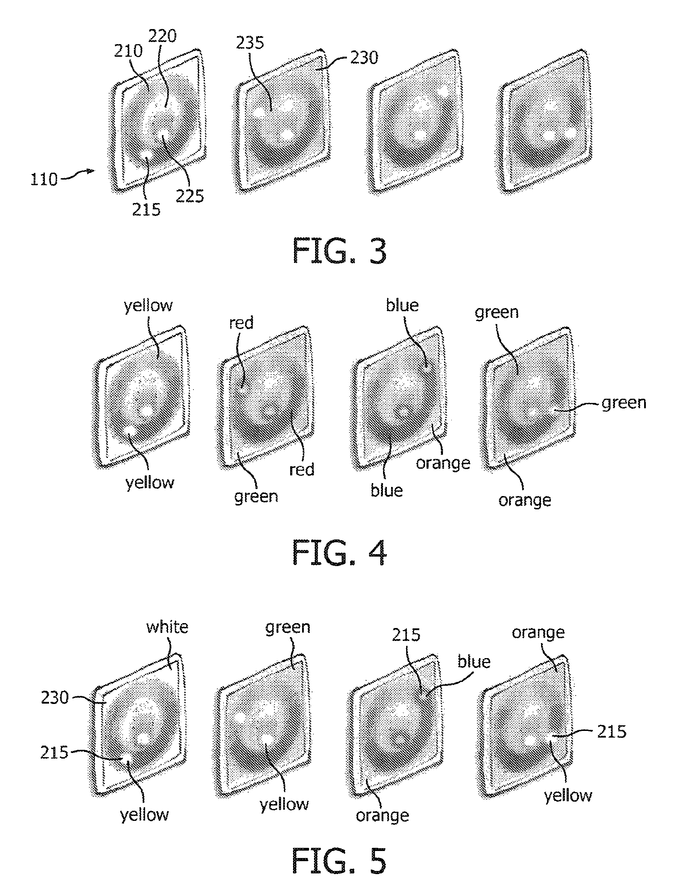

In figs. 3, 4 and 5 different examples for a layout of the display unit are illustrated. In fig. 3 it is illustrated to have always a yellow feedback indicator 215, 225 on the first or second scale 210 and 220, wherein the feedback 215 is hardly visible in the third illustration in fig. 3, if it placed in the yellow scale range.

Moreover, it is illustrated to adapt the background area 230 outside the ring 210 to increase the contrast and recognizability of the feedback indicator 215, 225.

In fig. 4 it is illustrated to always have the contrasting color to the underlying color within the first scale 210. That means in the blue scale the feedback indicator 215 will have a yellow color, wherein in the green scale the feedback indicator 215 will have a red color and in the yellow scale the feedback indicator 215 will have a blue color, wherein in the red scale the feedback indicator 215 will have a green color.

Moreover, it is illustrated to also change the background colors of the background areas 230, 235. When the feedback indicator 215 is in the green scale in the second picture of fig. 4, the background area 230, 235 is switched into a light green for increasing the contrast. If the feedback indicator 215 is in the yellow scale, the color of the feedback indicator is blue, wherein the background color is switched into orange to further increase the contrast. In fig. 5 it is illustrated to change the color of the feedback indicator 215 only if the feedback indicator 215 is in a color scale, which corresponds to its normal color. The feedback indicator 215 in fig. 5 is normally colored in yellow. Only if the feedback indicator 215 is within the yellow scale as illustrated in the third picture of fig. 5, the color of the feedback indicator 215 is changed into blue to increase the recognizability.

Moreover, it could be recognized in fig. 4 second and third picture and in fig. 5 third picture to use a edge color 216 and a center color 217 for illustrating the feedback indicator 215 to further increase the contrast.

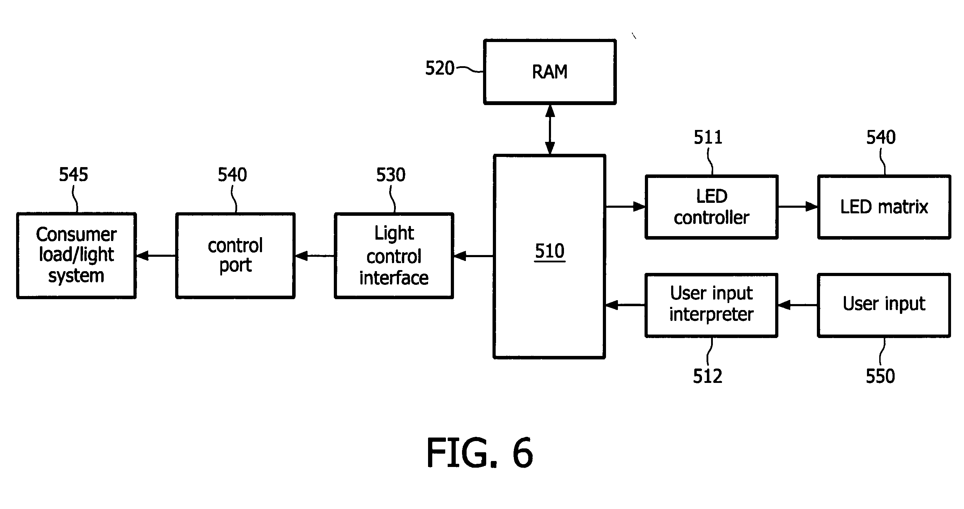

With reference to fig. 6, the construction of the user interface device according to the present invention will be explained. A user interface device includes a central control or computing unit 510 receiving a user input 550 inputted at the input device 111, e.g. touch screen, via the user input interpreter 512, wherein the user input interpreter 512 determines a position of the user input and provides the position to the central unit 510. The central control unit 510 is connected to an LED controller 511, which is connected to the LED matrix 540. Moreover, the control unit 510 may be connected to a memory 520 for storing program code, control functions, predetermined colors of the feedback indicators, ect. The central unit 510 is further connected to a light control interface 530 controlling the control port 540 for controlling the connected light system 545.

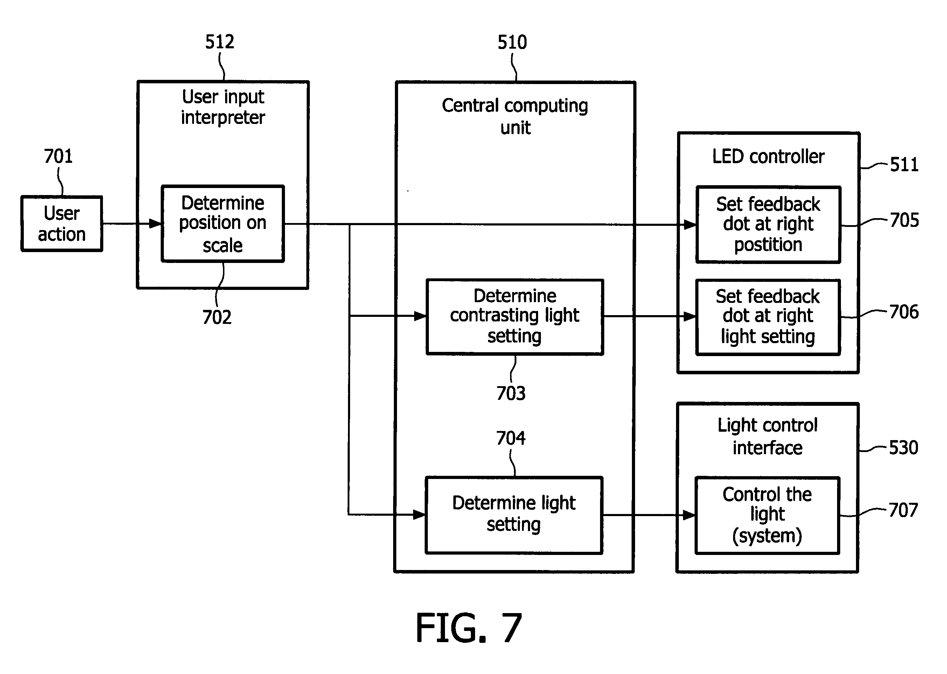

With reference to fig. 7, the steps performed after receiving a user action 701 are illustrated. A user input is received 701 at a certain position on the input device 111. The user input interpreter 512 determines 702 the position on the respective scale. This position is provided to the LED controller 511 and to the central unit 510. The central unit 510 determines in step 703 the contrast light setting of the feedback indicator 215, 225 wherein it further determines the light setting, in step 704, which will be forwarded to the light control interface 530 to control the connected light system, respectively in step 707.

After determining the contrasting light setting in step 703, the feedback indicator 215, 225 is changed in its color depending on the position within the scale in step 706.

Moreover, the LED controller 511 sets the position of the feedback indicator 215, 225 after receiving the position from the user input interpreter 512 in step 705. Thus, in respect to the display device 112, there are two important steps. The first step 705 is to change the position of the feedback indicator 215, 225 within the scale, wherein the second step 706 is to determine, where the feedback indicator 215, 225 is located and then to check whether the color needs to be changed based on the position of the feedback indicator 215, 225 within the scale.

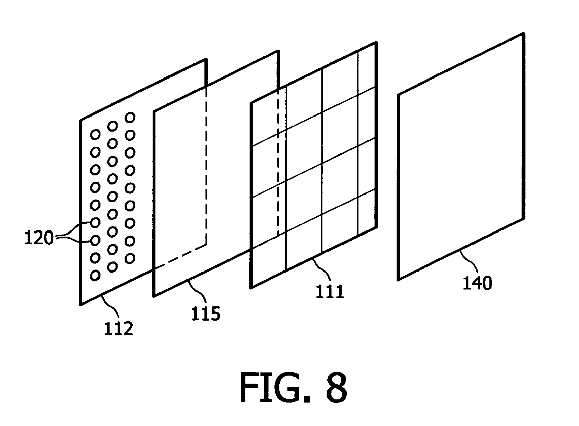

Fig. 8 illustrates an alternative embodiment of the present invention. To reduce the effort for driving the LED matrix, it is possible to insert a color layer 115 having a printed first and/or second scale. The color layer 115 is at least semitransparent. The display device 112 is stacked behind the color layer 115 and may display a certain color through the color layer 115. By arranging the color layer 115 in front of the display device 112, it is only necessary for the display device to illustrate the feedback indicator 215, 225. Thus, the LED controller 511 and the central computing unit 510 have only to change the position of the feedback indicator 215, 225 and to change the color of the feedback indicator 215, 225 depending on the position within the color layer 115 and on the color of the first scale on the color layer 115. Moreover, the control device according to fig. 8 includes a touchpad 111 and a protection cover 140 for protecting the other layers.

By using the present invention based on the inventive construction, it is possible to change the position and/or color of the feedback indicator 215, 225, since the display unit includes a plurality of LEDs. Depending on the user input, the central computing unit 510 may determine the position on the scale 210, 220 and the computing unit 510 knows what light setting (color) should be set at the connected light system 545 and can control the light system 545 accordingly. Moreover, the computing unit 510 can also determine the contrasting color or light setting for the feedback indicator 215, 225 and make sure that the small dot appears at the right position on the scale with the right light setting.

The inventive control device may be applied for a light system. It is especially useful for the lights or light systems with extended control possibilities, like color control, timers, daylight control ect. These light systems are available in professional domains like the retail domain but also in consumer domain like hotel rooms and homes.

## Claims

1. User interface device for controlling a consumer load, comprising:
- an input device (111); and
- a display device (112), the input device (111) and the display device (112) are arranged intemested to each other in one common layer or in two layers respectively stacked on each other,
wherein the display device (112) is adapted to display at least a first colored scale (210) indicating a first range of values adjustable by an user input on the input device (111) via the first colored scale (210) and to display a first feedback indicator (215) within the first colored scale (210) indicating the current value of the first range of values output by the user interface device to a consumer load (545),
**characterized in that**
the user interface device is adapted to change a color of the first feedback indicator (215) in the first colored scale (210) in dependence on positions of the first feedback indicator (215) within the first scale (210) and whereby the color of the first feedback indicator is different to the color of the current value of the first range of values.

2. User interface device for controlling a consumer load, comprising:
- an input device (111);
- a display device (112), the input device (111) and the display device (112) are arranged intemested to each other in one common layer or in two layers respectively stacked on each other, and;
- a color layer (115) arranged in front of the display device (112) and being at least a semi-transparent;
wherein the color layer (115) is adapted to display at least a first colored scale (210) printed on the color layer (115) and indicating a first range of values adjustable by an user input on the input device (111) via the first colored scale (210) and wherein the display device (112) is adapted to display a first feedback indicator (215) within the first colored scale (210) indicating the current value of the first range of values output by the user interface device to a consumer load (545),
**characterized in that**
the user interface device is adapted to change a color of the first feedback indicator (215) in the first colored scale (210) in dependence on positions of the first feedback indicator (215) within the first scale (210) and whereby the color of the first feedback indicator is different to the color of the current value of the first range of values.

3. User interface device as claimed in claim 1 or 2, wherein the display device (112) includes a plurality of LEDs (120) arranged in matrix form.

4. User interface device as claimed in any one of the preceding claims, wherein the display device (112) or the color layer (115) is adapted to display a second scale (220) indicating a second range of values adjustable by an user input on the second scale (220) and wherein the display device (112) is adapted to display a second feedback indicator (225) within the second scale (220) indicating the current second value output by the user interface device to the consumer load (545).

5. User interface device as claimed in claim 4, which is adapted to change the color of the second feedback indicator (225) in the second colored scale (220) in dependence on positions of the second feedback indicators (225) within the second scale (220).

6. User interface device as claimed in any one of the preceding claims, wherein the display device (112) includes a first background display area (230) and/or a second background display area (235) which are adjustable in its colors based on time and/or light incident on the user interface device and/or positions of the first or a second feedback indicators (215, 225) on the first and/or second scales (210, 220).

7. User interface device as claimed in any one of the preceding claims, wherein the first colored scale (210) and/or the second scale (220) include a plurality of colors.

8. User interface device as claimed in one of the claims 5 or 6, wherein the color of at least one of the first and/or second feedback indicators (215, 225) is controlled to have a contrasting color to the color of the respective first and/or second scale (210, 220) and/or to the adjacent background color of the background display area (230, 235).

9. User interface device as claimed in any one of the preceding claims, wherein at least one of the first and/or second feedback indicator (215, 225) is displayed as an area having a first and second color (216, 217).

10. User interface device as claimed in any one of the preceding claims, wherein one of the first or second scale (210, 220) represents an intensity scale, wherein the first respectively second feedback indicator (215, 225) is displayed in an opposite intensity to the intensity selected by the input device (111) at the respective position on the first respectively second scale (210, 220).

11. User interface device as claimed in any one of the preceding claims, wherein one of the first or second scale (210, 220) represents an color temperature scale, wherein the first respectively second feedback indicator (215, 225) is displayed in a matching color temperature but being more saturated.

12. User interface device as claimed in any one of the preceding claims, wherein one of the first or second scale (210, 220) represents an saturation scale, wherein the first respectively second feedback indicator (215, 225) is displayed in an opposite saturation level.

13. User interface device as claimed in any one of the preceding claims, wherein the first and/or second feedback indicator (215, 225) is displayed based on a daylight setting scale.

14. User interface device as claimed in any one of the preceding claims, comprising:
a controller (510) for controlling the input device (111) and the display device (112); and
a control port (540, 530) for outputting a control signal to the consumer load (545) based on a value selected from the range selected on the first and/or second scale (210,220).

15. Light system having at least one full color light source and /or variable color temperature light source and having a user interface device as claimed in one of the claims 1-13.

16. Method for controlling a consumer load (545) and for providing feedback information to a user, comprising the steps of:
receiving a user input on an input device (111),
displaying at least a first colored scale (210) indicating a first range of values on either a display device (112) or a printed color layer (115),
displaying a first feedback indicator (215) within the first colored scale (210) indicating the current value of the first range of values output by the user interface device to a consumer load (545)
**characterized in that**
the color of the first feedback indicator (215) in the first colored scale (210) is changed in dependence on positions of the first feedback indicator (215) within the first scale (210) and whereby the color of the first feedback indicator is different to the color of the current value of the first range of values.

17. A computer program enabled to carry out the method according to claim 16 when executed by a computer.

18. A record carrier storing a computer program according to claim 17.

19. A computer programmed to perform a method according to claim 16.

## Patentansprüche

1. Benutzeroberflächeneinrichtung zur Steuerung einer Verbraucherlast, mit:
- einer Eingabeeinrichtung (111); sowie
- einer Anzeigeeinrichtung (112), wobei die Eingabeeinrichtung (111) und die Anzeigeinrichtung (112) in einer gemeinsamen Schicht oder in zwei jeweils übereinander angeordneten Schichten ineinander eingebettet angeordnet sind,
wobei die Anzeigeeinrichtung (112) so eingerichtet ist, dass sie zumindest eine erste farbige Skala (210), auf der ein erster Bereich von Werten dargestellt ist, die durch eine Benutzereingabe auf der Eingabeeinrichtung (111) über die erste farbige Skala (210) einstellbar sind, sowie einen ersten Feedback-Indicator (215) innerhalb der ersten farbigen Skala (210) zeigt, der den aktuellen Wert des ersten Bereichs von Werten, die von der Benutzeroberflächeneinrichtung an eine Verbraucherlast (545) ausgegeben werden, anzeigt,
**dadurch gekennzeichnet, dass**
die Benutzeroberflächeneinrichtung so eingerichtet ist, dass sie eine Farbe des ersten Feedback-Indicators (215) in der ersten farbigen Skala (210) in Abhängigkeit von Positionen des ersten Feedback-Indicators (215) innerhalb der ersten Skala (210) wechselt, wobei sich die Farbe des ersten Feedback-Indicators von der Farbe des aktuellen Wertes des ersten Bereichs von Werten unterscheidet.

2. Benutzeroberflächeneinrichtung zur Steuerung einer Verbraucherlast, mit:
- einer Eingabeeinrichtung (111); sowie
- einer Anzeigeeinrichtung (112), wobei die Eingabeeinrichtung (111) und die Anzeigeinrichtung (112) in einer gemeinsamen Schicht oder in zwei jeweils übereinander angeordneten Schichten ineinander eingebettet angeordnet sind, sowie
- einer Farbschicht (115), die vor der Anzeigeeinrichtung (112) angeordnet ist und zumindest teildurchlässig ist,
wobei die Farbschicht (115) so ausgeführt ist, dass sie zumindest eine erste farbige Skala (210) zeigt, die auf der Farbschicht (115) aufgedruckt ist und auf der ein erster Bereich von Werten dargestellt ist, die durch eine Benutzereingabe auf der Eingabeeinrichtung (111) über die erste farbige Skala (210) einstellbar sind, und wobei die Anzeigeeinrichtung (112) so eingerichtet ist, dass sie einen ersten Feedback-Indicator (215) innerhalb der ersten farbigen Skala (210) zeigt, der den aktuellen Wert des ersten Bereichs von Werten, die von der Benutzeroberflächeneinrichtung an eine Verbraucherlast (545) ausgegeben werden, anzeigt,
**dadurch gekennzeichnet, dass**
die Benutzeroberflächeneinrichtung so eingerichtet ist, dass sie eine Farbe des ersten Feedback-Indicators (215) in der ersten farbigen Skala (210) in Abhängigkeit von Positionen des ersten Feedback-Indicator (215) innerhalb der ersten Skala (210) wechselt, wobei sich die Farbe des ersten Feedback-Indicators von der Farbe des aktuellen Wertes des ersten Bereichs von Werten unterscheidet.

3. Benutzeroberflächeneinrichtung nach Anspruch 1 oder 2, wobei die Anzeigeeinrichtung (112) mehrere in Matrixform angeordnete LEDs (120) umfasst.

4. Benutzeroberflächeneinrichtung nach einem der vorangegangenen Ansprüche, wobei die Anzeigeeinrichtung (112) oder die Farbschicht (115) so vorgesehen ist, dass sie eine zweite Skala (220) zeigt, auf der ein zweiter Bereich von Werten dargestellt ist, die durch eine Benutzereingabe auf der zweiten Skala (220) einstellbar sind, und wobei die Anzeigeeinrichtung (112) so eingerichtet ist, dass sie einen zweiten Feedback-Indicator (225) innerhalb der zweiten Skala (220) zeigt, der den aktuellen zweiten Wert, der von der Benutzeroberflächeneinrichtung an die Verbraucherlast (545) ausgegeben wird, anzeigt,

5. Benutzeroberflächeneinrichtung nach Anspruch 4, die so eingerichtet ist, dass sie die Farbe des zweiten Feedback-Indicators (225) in der zweiten farbigen Skala (220) in Abhängigkeit von Positionen des zweiten Feedback-Indicators (225) innerhalb der zweiten Skala (220) wechselt.

6. Benutzeroberflächeneinrichtung nach einem der vorangegangenen Ansprüche, wobei die Anzeigeeinrichtung (112) einen ersten Hintergrund-Anzeigebereich (230) und/oder einen zweiten Hintergrund-Anzeigebereich (235) umfasst, die, basierend auf Zeit und/oder auf die Benutzeroberflächeneinrichtung auffallendes Licht und/oder Positionen des ersten oder eines zweiten Feedback-Indicators (215, 225) auf der ersten und/oder der zweiten Skala (210, 220), in ihren Farben einstellbar sind.

7. Benutzeroberflächeneinrichtung nach einem der vorangegangenen Ansprüche, wobei die erste farbige Skala (210) und/oder die zweite Skala (220) mehrere Farben umfassen/umfasst.

8. Benutzeroberflächeneinrichtung nach einem der vorangegangenen Ansprüche, wobei die Farbe von zumindest dem ersten und/oder dem zweiten Feedback-Indicator (215, 225) so gesteuert wird, dass sie eine Kontrastfarbe zu der jeweiligen ersten und/oder zweiten Skala (210, 220) und/oder zu der benachbarten Hintergrundfarbe des Hintergrund-Anzeigebereichs (230, 235) darstellt.

9. Benutzeroberflächeneinrichtung nach einem der vorangegangenen Ansprüche, wobei zumindest der erste und/oder zweite Feedback-Indicator (215, 225) als eine Fläche mit einer ersten und einer zweiten Farbe (216, 217) dargestellt sind/ist.

10. Benutzeroberflächeneinrichtung nach einem der vorangegangenen Ansprüche, wobei die erste oder die zweite Skala (210, 220) eine Intensitätsskala darstellt, wobei der erste beziehungsweise der zweite Feedback-Indicator (215, 225) in einer zu der über die Eingabeeinrichtung (111) an der jeweiligen Stelle auf der ersten beziehungsweise zweiten Skala (210, 220) ausgewählten Intensität entgegengesetzten Intensität angezeigt wird.

11. Benutzeroberflächeneinrichtung nach einem der vorangegangenen Ansprüche, wobei die erste oder zweite Skala (210, 220) eine Farbtemperaturskala darstellt, wobei der erste beziehungsweise zweite Feedback-Indicator (215, 225) in einer passenden Farbtemperatur, jedoch gesättigter, angezeigt wird.

12. Benutzeroberflächeneinrichtung nach einem der vorangegangenen Ansprüche, wobei die erste oder zweite Skala (210, 220) eine Sättigungsskala darstellt, wobei der erste beziehungsweise zweite Feedback-Indicator (215, 225) mit einem entgegengesetzten Sättigungspegel dargestellt ist.

13. Benutzeroberflächeneinrichtung nach einem der vorangegangenen Ansprüche, wobei der erste und/oder zweite Feedback-Indicator (215, 225) auf einer Tageslichteinstellungsskala basierend angezeigt werden/wird.

14. Benutzeroberflächeneinrichtung nach einem der vorangegangenen Ansprüche, mit:
einer Steuereinheit (510) zur Steuerung der Eingabeeinrichtung (111) und der Anzeigeeinrichtung (112); sowie
einem Steueranschluss (540, 530) zur Ausgabe eines Steuersignals an die Verbraucherlast (545) aufgrund eines Wertes, der aus dem auf der ersten und/oder zweiten Skala (210, 220) ausgewählten Bereich ausgewählt wird.

15. Lichtsystem mit mindestens einer Vollfarbenlichtquelle und/oder Lichtquelle mit variabler Farbtemperatur sowie einer Benutzeroberflächeneinrichtung nach einem der Ansprüche 1-13.

16. Verfahren, um eine Verbraucherlast (545) zu steuern und einem Benutzer Rückinformationen zuzuführen, wobei das Verfahren die folgenden Schritte umfasst, wonach:
eine Benutzereingabe auf einer Eingabeeinrichtung (111) empfangen wird,
zumindest eine erste farbige Skala (210) angezeigt wird, auf der ein erster Bereich von Werten auf entweder einer Anzeigeeinrichtung (112) oder einer aufgedruckten Farbschicht (115) dargestellt ist,
ein erster Feedback-Indicator (215) innerhalb der ersten farbigen Skala (210) angezeigt wird, der den aktuellen Wert des ersten Bereichs von Werten, die von der Benutzeroberflächeneinrichtung an eine Verbraucherlast (545) ausgegeben werden, zeigt,
**dadurch gekennzeichnet, dass**
die Farbe des ersten Feedback-Indicators (215) in der ersten farbigen Skala (210) in Abhängigkeit von Positionen des ersten Feedback-Indicators (215) innerhalb der ersten Skala (210) wechselt, wobei sich die Farbe des ersten Feedback-Indicators von der Farbe des aktuellen Wertes des ersten Bereichs von Werten unterscheidet.

17. Computerprogramm, das bei Ablaufen auf einem Computer imstande ist, das Verfahren nach Anspruch 16 auszuführen.

18. Aufzeichnungsträger, der ein Computerprogramm nach Anspruch 17 speichert.

19. Computer, der so programmiert ist, dass er ein Verfahren nach Anspruch 16 durchführt.

## Revendications

1. Dispositif d'interface utilisateur pour commander une charge de consommateur, comprenant :
- un dispositif d'entrée (111) ; et
- un dispositif d'affichage (112), le dispositif d'entrée (111) et le dispositif d'affichage (112) étant imbriqués dans une couche commune ou dans deux couches respectivement empilées l'une sur l'autre,
dans lequel le dispositif d'affichage (112) est apte à afficher au moins une première échelle de couleur (210) indiquant une première plage de valeurs ajustables par une entrée d'utilisateur sur le dispositif d'entrée (111) par l'intermédiaire de la première échelle de couleur (210) et à afficher un premier indicateur de rétroaction (215) à l'intérieur de la première échelle de couleur (210) indiquant la valeur actuelle de la première plage de valeurs délivrées par le dispositif d'interface utilisateur à une charge de consommateur (545),
**caractérisé en ce que**
le dispositif d'interface utilisateur est apte à changer une couleur du premier indicateur de rétroaction (215) dans la première échelle de couleur (210) en fonction de positions du premier indicateur de rétroaction (215) à l'intérieur de la première échelle (210) et de telle manière que la couleur du premier indicateur de rétroaction soit différente de la couleur de la valeur actuelle de la première plage de valeurs.

2. Dispositif d'interface utilisateur pour commander une charge de consommateur, comprenant :
- un dispositif d'entrée (111) ;
- un dispositif d'affichage (112), le dispositif d'entrée (111) et le dispositif d'affichage (112) étant imbriqués dans une couche commune ou dans deux couches respectivement empilées l'une sur l'autre ; et
- une couche de couleur (115) agencée à l'avant du dispositif d'affichage (112) et étant au moins semi-transparente ;
dans lequel la couche de couleur (115) est apte à afficher au moins une première échelle de couleur (210) imprimée sur la couche de couleur (115) et indiquant une première plage de valeurs ajustables par une entrée d'utilisateur sur le dispositif d'entrée (111) par l'intermédiaire de la première échelle de couleur (210) et dans lequel le dispositif d'affichage (112) est apte à afficher un premier indicateur de rétroaction (215) à l'intérieur de la première échelle de couleur (210) indiquant la valeur actuelle de la première plage de valeurs délivrées par le dispositif d'interface utilisateur à une charge de consommateur (545),
**caractérisé en ce que**
le dispositif d'interface utilisateur est apte à changer une couleur du premier indicateur de rétroaction (215) dans la première échelle de couleur (210) en fonction de positions du premier indicateur de rétroaction (215) à l'intérieur de la première échelle (210) et de telle manière que la couleur du premier indicateur de rétroaction soit différente de la couleur de la valeur actuelle de la première plage de valeurs.

3. Dispositif d'interface utilisateur selon la revendication 1 ou 2, dans lequel le dispositif d'affichage (112) comprend une pluralité de LED (120) agencées sous forme matricielle.

4. Dispositif d'interface utilisateur selon l'une quelconque des revendications précédentes, dans lequel le dispositif d'affichage (112) ou la couche de couleur (115) est apte à afficher une deuxième échelle (220) indiquant une deuxième plage de valeurs ajustables par une entrée d'utilisateur sur la deuxième échelle (220) et dans lequel le dispositif d'affichage (112) est apte à afficher un deuxième indicateur de rétroaction (225) à l'intérieur de la deuxième échelle (220) indiquant la deuxième valeur actuelle délivrée par le dispositif d'interface utilisateur à la charge de consommateur (545).

5. Dispositif d'interface utilisateur selon la revendication 4, qui est apte à changer la couleur du deuxième indicateur de rétroaction (225) dans la deuxième échelle de couleur (220) en fonction de positions du deuxième indicateur de rétroaction (225) dans la deuxième échelle (220).

6. Dispositif d'interface utilisateur selon l'une quelconque des revendications précédentes, dans lequel le dispositif d'affichage (112) comprend une première zone d'affichage d'arrière-plan (230) et/ou une deuxième zone d'affichage d'arrière-plan (235) dont les couleurs sont ajustables sur la base du temps et/ou de la lumière incidente sur le dispositif d'interface utilisateur et/ou de positions du premier ou du deuxième indicateur de rétroaction (215, 225) sur la première et/ou la deuxième échelle (210, 220).

7. Dispositif d'interface utilisateur selon l'une quelconque des revendications précédentes, dans lequel la première échelle de couleur (210) et/ou la deuxième échelle (220) comprennent une pluralité de couleurs.

8. Dispositif d'interface utilisateur selon la revendication 5 ou 6, dans lequel la couleur d'au moins l'un du premier et/ou du deuxième indicateur de rétroaction (215, 225) est régulée pour être en contraste avec la couleur de l'une respective de la première et/ou de la deuxième échelle (210, 220) et/ou avec la couleur d'arrière-plan adjacente de la zone d'affichage d'arrière-plan (230, 235).

9. Dispositif d'interface utilisateur selon l'une quelconque des revendications précédentes, dans lequel au moins l'un du premier et/ou du deuxième indicateur de rétroaction (215, 225) est affiché sous la forme d'une zone ayant une première et une deuxième couleur (216, 217).

10. Dispositif d'interface utilisateur selon l'une quelconque des revendications précédentes, dans lequel l'une de la première ou la deuxième échelle (210, 220) représente une échelle d'intensité, dans lequel l'un respectif du premier ou du deuxième indicateur de rétroaction (215, 225) est affiché avec une intensité opposée à l'intensité sélectionnée par le dispositif d'entrée (111) à la position respective sur l'une respective de la première ou de la deuxième échelle (210, 220).

11. Dispositif d'interface utilisateur selon l'une quelconque des revendications précédentes, dans lequel l'une de la première ou de la deuxième échelle (210, 220) représente une échelle de température de couleur, dans lequel l'un respectif du premier ou du deuxième indicateur de rétroaction (215, 225) est affiché à une température de couleur correspondante mais plus saturée.

12. Dispositif d'interface utilisateur selon l'une quelconque des revendications précédentes, dans lequel l'une de la première ou de la deuxième échelle (210, 220) représente une échelle de saturation, dans lequel l'un respectif du premier ou du deuxième indicateur de rétroaction (215, 225) est affiché à un niveau de saturation opposé.

13. Dispositif d'interface utilisateur selon l'une quelconque des revendications précédentes, dans lequel le premier et/ou le deuxième indicateur de rétroaction (215, 225) est affiché sur la base d'une échelle de réglage de la lumière du jour.

14. Dispositif d'interface utilisateur selon l'une quelconque des revendications précédentes, comprenant :
un organe de commande (510) pour commander le dispositif d'entrée (111) et le dispositif d'affichage (112) ; et
un port de commande (540, 530) pour délivrer un signal de commande à la charge de consommateur (545) sur la base d'une valeur sélectionnée dans la plage sélectionnée sur la première et/ou la deuxième échelle (210, 220).

15. Système d'éclairage ayant au moins une source de lumière de couleur complète et/ou une source de lumière de température de couleur variable et ayant un dispositif d'interface utilisateur selon l'une des revendications 1 à 13.

16. Procédé pour commander une charge de consommateur (545) et pour fournir des informations de rétroaction à un utilisateur, comprenant les étapes de :
la réception d'une entrée d'utilisateur sur un dispositif d'entrée (111),
l'affichage d'au moins une première échelle de couleur (210) indiquant une première plage de valeurs sur un dispositif d'affichage (112) ou sur une couche de couleur imprimée (115),
l'affichage d'un premier indicateur de rétroaction (215) à l'intérieur de la première échelle de couleur (210) indiquant la valeur actuelle de la première plage de valeurs délivrées par le dispositif d'interface utilisateur à une charge de consommateur (545),
**caractérisé en ce que**
la couleur du premier indicateur de rétroaction (215) dans la première échelle de couleur (210) est changée en fonction de positions du premier indicateur de rétroaction (215) à l'intérieur de la première échelle (210) et de telle manière que la couleur du premier indicateur de rétroaction soit différente de la couleur de la valeur actuelle de la première plage de valeurs.

17. Programme informatique permettant d'effectuer le procédé selon la revendication 16 lorsqu'il est exécuté par un ordinateur.

18. Support d'enregistrement stockant un programme informatique selon la revendication 17.

19. Ordinateur programmé pour effectuer un procédé selon la revendication 16.
